# EUROPEAN PATENT SPECIFICATION

(11) **EP 1 795 324 B1**
(45) Date of publication and mention of the grant of the patent: **25.05.2011**
(21) Application number: 06124933.0
(22) Date of filing: 28.11.2006
(51) Int. Cl.: B29C 43/24, B29C 43/46, B21B 31/32, B21B 37/62

(54) **System for positioning a laminating cylinder in a calender**
System zur Positionierung eines Laminierzylinders eines Kalanders
Système pour le positionnement d'un cylindre de calandre

(30) Priority: 07.12.2005 IT VA20050067
(43) Date of publication of application: 13.06.2007
(73) Proprietor: Comerio Ercole S.p.A., 21052 Busto Arsizio (Varese) (IT)
(72) Inventor: Lualdi, Renato, 21052 Busto Arsizio (IT)
(74) Representative: Pellegri, Alberto

(56) References cited:
- DE-A1- 10 112 296
- GB-A- 1 307 602
- GB-A- 1 336 069
- US-A- 3 936 258
- US-A- 5 262 101

## Description

Calenders and mixers are machines used in numerous applications for producing laminated ribbons of various materials often having a polymeric and/or elastomeric base or matrix.

Control of the lamination gap between a pair of cylinders is the object of a wealth of publications.

GB-A-1307602 discloses a control mechanism based on the use of distinct analog servo mechanisms for independently moving the bearing blocks of a movable roll, each including an electro-hydraulic servo valve associated to a linear potentiometer that senses the position assumed by the bearing block moved by a hydraulic cylinder actuator.

US Pat. No. 3,936,258 discloses an analog feedback control system of the position of the bearing boxes of a movable roll, the position of which may be manually or automatically commanded. According to an embodiment, a logic motor driver operated from a control switch or a control signal generated from a thickness gauge, controls a stepper motor that sets the cursor of a potentiometer for establishing a reference voltage with which the feedback voltage coming from position transducers is compared to produce a negative feedback function of the servo loop.

GB-A-1336069 discloses hydraulic means for controlling the adjustment of the position of a movable roll in the form of a detachable hydraulic unit positioned in a way to be readily removable for routine maintenance or replacement.

DE 1 0112296 A1 discloses hydraulic means for controlling the nip between two cooperating rolls of a calender.

US Pat No. 5,262,101 discloses a calendering machine for forming a plastic foil having a plurality of sensors of different operating parameters, providing data that are processed by a control unit which controls a plurality of different adjusting mechanisms of the machine.

Traditionally, the gap between the cylinders of an operating pair of cylinders of these machines is regulated by screw-lead nut devices that permit to shift the supporting bushes of a mobile cylinder while the other cylinder of a calendering pair may remain fixed. In this way, by rotating the screws, the supports of the two ends of the cylinder shaft may be shifted.

Often for certain productions, the thickness of the material being laminated between two calendering cylinders of the machine may be constantly detected by analog sensors and in function of the detected thickness of the laminated material, an automatic control system of the lamination gap between the two cylinders commands eventually the rotation of the screws of the supports of the mobile cylinder in one or in the opposite direction carrying out a regulation of the lamination gap between the cylinders, according to a closed loop control technique.

According to this classical control mode, during operation, the screw devices rotate repeatedly within a relatively small tract of the total travel length of the lead nut over the screw devices and these frequent rotations and counter rotations of very limited span that occur during the whole working time produce a localized wear of the threads of the screws. In fact, whit these automatic control systems of the calendering process for optimizing the product, wear conditions of the automatic gap regulation screws are persistent. These systems in fact contemplate a continuous control of the thickness of the laminated product and generation of correction signals at relatively brief intervals, for example with a frequency of three or four times per minute.

The threads of the screws of the gap regulation devices are subject to a fast intolerable wear rate and consequent loss of precision and consequently they must necessarily be periodically substituted with new ones.

In order to reduce the wear of the screws and to prolong their operating life, a positioning device for controlling the gap between two calendering cylinders functionally coupling together a screw-lead nut device and a hydraulic cylinder was developed and disclosed in prior Italian patent No. 1214555, of the same applicant.

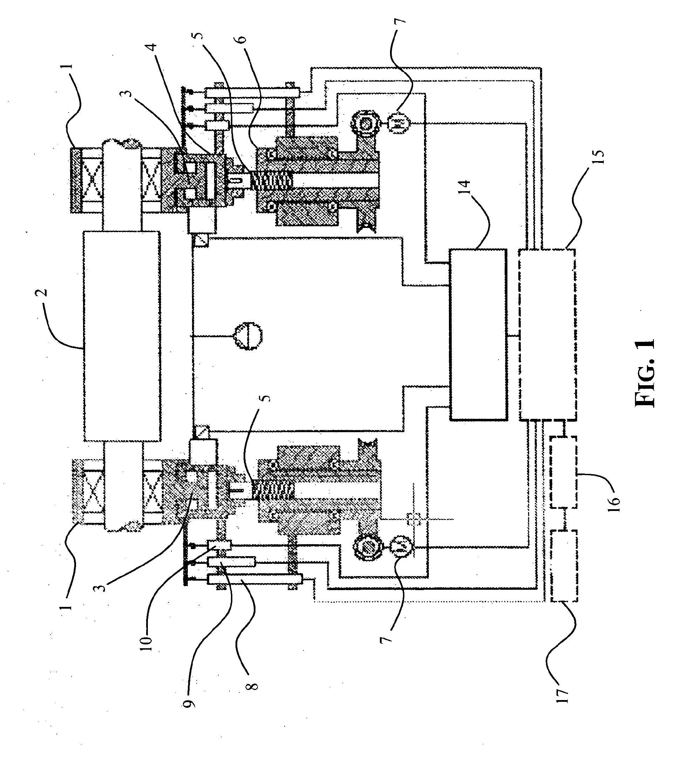

According to such a prior technique depicted in Figure 1, each support 1 of the movable cylinder 2 is connected to the stem piston 3 of the hydraulic cylinder, while the relative cylinder 4 is connected to the screw 5. The shifting of each support for a relatively long travel distance, is actuated by rotating the lead nut 6 of the device through the servomotor 7 driven in an open loop mode and obviously in parallel for both supports of the movable cylinder 2. In other words, the screw-lead nut devices are used for moving the cylinder for relatively long travel distances, typically for backing it off the calendering zone in order to permit the cleaning and/or carrying out maintenance interventions and thereafter for bringing the movable cylinder close to the calendering zone.

Thereafter, the relatively small shifts of the supports of the cylinder that are driven by the automatic closed loop control system of the calendering gap during operation are actuated by the hydraulic cylinders 3-4.

The advantage of this solution is that, under comparable working conditions, the normal operating life of the screw devices used for performing relatively large shifts of the movable cylinder 2 of the machine is outstandingly prolonged because the usage of the screw-lead nut devices becomes far less frequent.

The disadvantage of such a solution is represented by a limited useful travel distance during automatic control of the lamination gap as a consequence of which, in case of particularly ample adjustment shifts, the process of positioning the movable cylinder becomes relatively complex and requires longer execution times.

Another drawback is due to the fact that detection of the position of the movable cylinder implies the reading of a plurality of sensors often of different type that requires the processing and interpolation of several error signals, operations that are carried out within a programmable logic circuit PLC 15 controlled by a central control unit that may be a common PC 16-17, through which the control algorithms and the control of their execution are programmed.

The complexity of these procedures implies a loss of precision and/or longer response time for the positioning of the cylinder with a consequent decrement of productivity.

A further inconvenience of this prior solution may occur during an emergency when a fast backing off of the movable cylinder from the work zone is commanded in an open loop control mode and therefore with possible differences of translation speed of the two supports of the cylinder. This implies risks of disalignment with consequent stoppages or cloggings and damages of mechanical parts, such as for example bushings and the like.

Yet another disadvantage of such a solution consists in not permitting to install the position sensor of the mobile cylinder on the axis of the hydraulic cylinder. The sensor must necessarily be mounted in an offset position aside of the support thus it may detect as shift value even other movements, such as for example a spatial rotation of the support itself as allowed by inevitable mechanical clearances.

Finally, in these traditionally analog control systems, as contemplated in the system described in the above-mentioned prior patent, regulation is driven in voltage mode. With such a type of regulation, in order to achieve high precision, it is necessary to operate with relatively short travel distances, practically in the order of one millimeter. In fact, precision of regulation depends on the maximum travel range and therefore the shorter the regulation range the greater the precision.

Moreover, in order to account for the two different types of actuators that act in series (screw-lead nut device + hydraulic cylinder), it is necessary to employ three different sensors: 8, 9 and 10, the resulting position value being generated in the analog system of the prior art on the basis of a combination of the three position signals generated the respective sensors.

The present invention permits to overcome all the above discussed inconveniences, limitations and inefficiencies of the known systems.

Such an important result is obtained by eliminating completely the use of screw-drive nut devices for shifting the supports of a cylinder of a calender or mixer, on which a precise automatic control of the lamination gap must be performed during operation.

Basically, each support of the movable cylinder is shifted by the action of a single hydraulic cylinder both for carrying out ample shifts required for positioning the cylinder, off or in the working zone of the machine, as well as for implementing an automatic control of the lamination gap during operation. Both types of movements of the two supports of the movable cylinder are actuated in parallel and always under closed loop control conditions for eliminating risks of disalignments even when commanding large movements of the cylinder as they may be necessary for example for carrying out maintenance and cleaning operations of the machine or for quickly backing off of the movable cylinder in response to an emergency.

The tie between amplitude of the maximum travel of the actuator and the degree of precision that may be obtained with common analog type closed loop control systems is overcome by realizing a completely digital driving of the hydraulic actuator. In other words, injection release valves of the drive fluid from the two chambers of the hydraulic cylinder are digitally driven through a dedicated digital drive interface circuit.

From preliminary tests conducted on a calender of average size, an outstandingly high precision of positioning of the cylinder over a travel of over 100 mm has been achieved.

Unicity of the actuating devices of the movement of the cylinder supports permits to use a single sensor for detecting the cylinder support position instead of a number of sensors as was necessary in the above discussed prior system.

This, beside simplifying the control cylinder of the greatly reduces the complexity of the error signals processing by the central processing and control unit thus sensibly improving the response time of the automatic regulation system of the lamination gap.

The different aspects and advantages of this invention will become even more clear through the following description of an embodiment, with reference to the attached drawings, wherein:
**Figure 1**, as already discussed, represents the scheme of a known system for positioning a movable cylinder and for automatic regulation of the lamination gap in a calender or mixer machine;
**Figure 2** shows the functional diagram of the positioning and automatic regulation system of the lamination gap of a movable cylinder of a calender or of a mixer according to the present invention;
**Figure 3** shows a complete diagram of the positioning and automatic regulation of the lamination gap system according to a preferred embodiment.

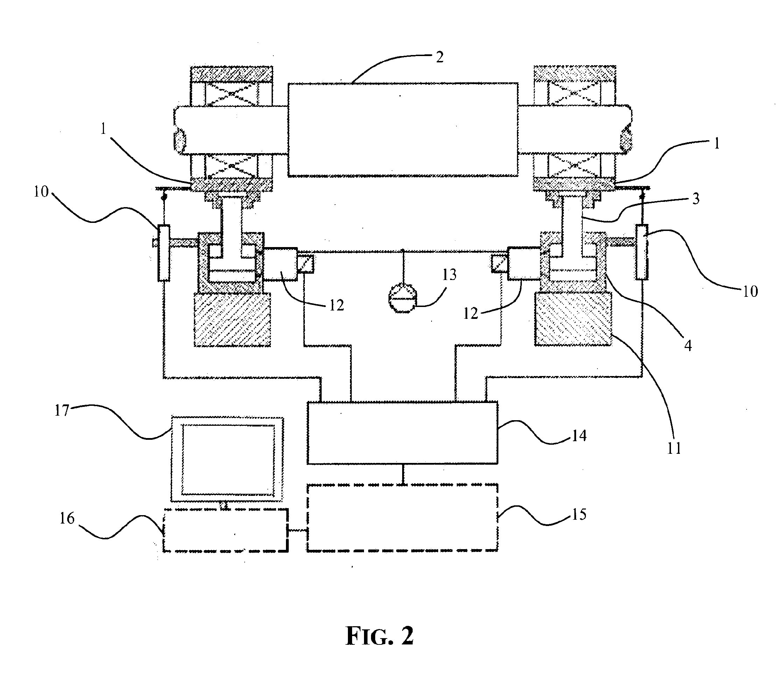

With reference to Figure 2, the system of this invention employs two identical hydraulic cylinders 3, 4, the cylinder part of which is solidly connected to the static structure of the machine 11, while the (piston) stem 3 is connected to the respective support block 1 of the operating cylinder 2 of the machine. The position of each support 1 is detected by a single sensor 10.

The usable travel length of the hydraulic cylinders 3 and 4 and of the respective sensors 10 may be of the order of hundreds of millimeters, practically allowing to perform all maneuvers of positioning of the mobile cylinder 2, even for cleaning and maintenance operations.

Each valve 12 driving the respective hydraulic cylinder is connected to the hydraulic circuit of the drive fluid that is maintained at a constant pressure by a pump and relative pressure equalization ballast vessel 13.

The position signals generated by the sensors 10, if not already output in digital form by the sensor, are converted to digital values by dedicated analog/digital converters (ADC) of the interface block 14 communicating with the programmable control logic circuit 15 of the position of the supports 1 of the movable cylinder 2 of the machine. The programmable logic circuit 15 executes control algorithms that may be defined for example through a common personal computer 16-17.

The interface circuit 14 drives in digital mode the valves 12 of the actuating hydraulic cylinders 3-4.

Though the functional scheme of Figure 2 shows the position sensors 10 acting along a parallel axis spaced from the axis of movement of the stem 3 and of the relative support 1, such a solution is not optimal in terms of ensuring maximum precision.

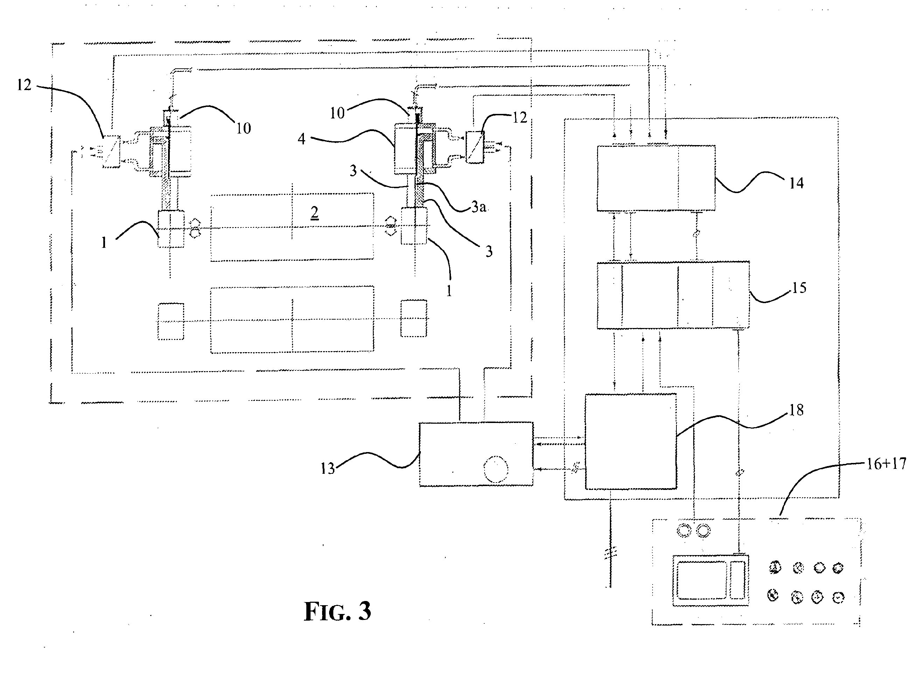

A preferred arrangement is to install the position sensor 10 internally to the respective hydraulic cylinder 3-4, as depicted in Figure 3.

As may be observed in the partially sectional view of the hydraulic cylinders 3-4, the position sensor 10 senses the difference of penetration of a sensing element of the sensor into the metallic body of the piston-stem 3 purposely provided with an axial hole 3a.

Therefore, the sensor 10 detects the position of the piston-stem of the actuating hydraulic cylinder, relative to the fixed structure 11 of the machine to which is solidly fastened. In such a way precision of the relative position detected by the sensor is enhanced because the detection is substantially exempt of spurious contributions due to inevitable mechanical clearances in a device that must ensure freedom of movement, that is exemption from seizures and frictions that could oppose movements.

Figure 3 shows a complete diagram of the entirely digital control system for positioning the cylinder and for regulating the gap of lamination between the mobile cylinder and a cooperating cylinder of the machine during operation.

The valves 12 are driven by an operating fluid (commonly oil) pressurized by the hydraulic control unit 13 that comprises a pump and a pressure equalizing ballast vessel for distributing the fluid in parallel to the valves 12 through inlet and outlet conduits.

The two position sensors 10 and the drive valves 12 of the actuating hydraulic cylinders 3-4 are interfaced to respective input and output terminals of a digital interfacing circuit, which is in turn coupled to respective circuits of a logic block of programmable digital control connected to a console that includes a microprocessor for the execution of preestablished control algorithm (which may in practice be a common personal computer).

Of course, the system contemplates the presence of an electro-mechanical power supply and control device of the hydraulic central unit including means capable in an emergency of actuating the delivery of pressurized oil to the hydraulic cylinders 3 and 4 for retracting the operating cylinder 2 from the work zone for example in the event of a breakdown of the electrical distribution mains.

Differently from the analog control systems commonly employed for automatically regulating the gap of lamination in a traditional closed loop mode, the control system is entirely digital and therefore implements a regulation by bits. It is possible to achieve an outstanding precision of regulation, far greater than the precision that could be obtained with a comparable analog control system and moreover the precision is unaffected by the useful travel length of the single hydraulic actuator.

Therefore, full precision can be maintained even over travel distances of 100 mm or greater.

In view of the fact that all displacements of the movable cylinder for moving it toward and away from the work zone as well as for automatically regulating the gap of lamination during operation are actuated by single hydraulic cylinders, only a single position detector is required for communicating with the control system through a serial data transmission line.

In the digital control system of this invention, the commanded position is represented by a digital value that is sent by the PC (or by the PLC) directly to the digital regulating system for implementing a completely digital close loop control system.

## Claims

1. A system for positioning a movable cylinder (2) supported at its opposite ends in bushings of two movable supports (1) and for automatically regulating the gap of lamination of a material between a cylinder held at a fixed position and said movable cylinder (2) in a calender or mixer machine, comprising at least a sensor (10) for detecting the relative spatial position of said two movable supports (1), settable control means of actuating devices (3-4) for moving said two movable supports (1), **characterized in that** the system comprises
a programmable control logic circuit (15) of digital signal processing and digital closed loop control of said actuating devices (3-4) and an interface circuit (14);
each support (1) of said movable cylinder (2) is moved by a single hydraulic cylinder (3-4) controlled in digital closed loop mode for positioning the movable cylinder (2) in or away from the working zone and for automatically regulating the gap of lamination during operation;
a single sensor (10) detects the position of the respecitive support (1) relative to a fixed structure (11), providing digital position data to said programmable control logic circuit (15) through said interface circuit (14);
said interface circuit (14) controls drive valves (12) of the two hydraulic cylinders (3-4) in digital closed loop mode during both said phases of positioning said movable cylinder (2) in or away from the working zone and of automatically regulating the gap of lamination during operation.

2. The system according to claim 1, wherein a mobile part of said single sensor (10) for detecting the position of each support (1) detects the movement of the stem-piston (3) of the hydraulic cylinder (3-4) relative to a fixed part of the sensor.

3. The system according to claim 1, wherein each hydraulic cylinder (34) has a mobile part of said position sensor (10) inside an axial cavity (3a) of a stem-piston (3) of the hydraulic cylinder connected to the respective movable support (1) for generating a digital value representative of the relative spatial position of the support (1);
said interface circuit (14) communicates with said programmable control logic circuit (15) executing a certain control algorithm, for conveying said digital position values and for controlling the valves (12) of said hydraulic cylinders (3-4).

## Patentansprüche

1. System zur Positionierung eines beweglichen Zylinders (2), der an seinen gegenüberliegenden Enden in Lagerbuchsen zweier beweglicher Halterungen (1) gehalten wird, und zur automatischen Regelung des Laminierungsspalts für ein Material zwischen einem in einer festen Position gehaltenen Zylinder und dem beweglichen Zylinder (2) in einer Kalander oder Mischmaschine, das mindestens einen Sensor (10) zur Ermittlung der relativen räumlichen Position der beiden beweglichen Halterungen (1) und einstellbare Steuermittel von Stellvorrichtungen (3-4) zur Bewegung der beiden beweglichen Halterungen (1) aufweist, **dadurch gekennzeichnet, daß**
das System eine programmierbare Steuerlogikschaltung (15) einer digitalen Signalverarbeitung und digitalen geschlossenen Regelkreises der Stellvorrichtungen (3-4) und eine Schnittstellenschaltung (14) aufweist;
jede Halterung (1) des beweglichen Zylinders (2) zur Positionierung des beweglichen Zylinders (2) in den Arbeitsbereich oder von ihm weg und zur automatischen Regelung des Laminierungsspalts während des Betriebs durch einen einzelnen Hydraulikzylinder (3-4) bewegt wird, der in einer digitalen geschlossenen Regelkreisbetriebsart gesteuert wird;
ein einzelner Sensor (10) die Position der jeweiligen Halterung (1) relativ zu einer festen Struktur (11) ermittelt, wobei er durch die Schnittstellenschaltung (14) digitale Positionsdaten an die programmierbare Steuerlogikschaltung (15) liefert;
die Schnittstellenschaltung (14) während beider Phasen der Positionierung des beweglichen Zylinders (2) in den Arbeitsbereich oder von ihm weg und der automatischen Regelung des Laminierungsspalts während des Betriebs Antriebsventile (12) der beiden Hydraulikzylinder (3-4) in einer digitalen geschlossenen Regelkreisbetriebsart steuert.

2. System nach Anspruch 1, wobei ein bewegliches Teil des einzelnen Sensors (10) zur Ermittlung der Position jeder Halterung (1) die Bewegung des Kolbenschafts (3) des Hydraulikzylinders (3-4) relativ zu einem festen Teil des Sensors ermittelt.

3. System nach Anspruch 1, wobei jeder Hydraulikzylinder (3-4) ein bewegliches Teil des Positionssensors (10) innerhalb eines axialen Hohlraums (3a) eines Kolbenschafts (3) des Hydraulikzylinders aufweist, das mit der jeweiligen beweglichen Halterung (1) zur Erzeugung eines digitalen Werts aufweist, der für die relative räumliche Position der Halterung (1) repräsentativ ist; die Schnittstellenschaltung (14) mit der programmierbaren Steuerlogikschaltung (15) kommuniziert, die einen bestimmten Steueralgorithmus ausführt, um die digitalen Positionswerte zu übertragen und die Ventile (12) der Hydraulikzylinder (3-4) zu steuern.

## Revendications

1. Système pour positionner un cylindre mobile (2) supporté au niveau de ses extrémités opposées par des roulements de deux supports mobiles (1) et pour réguler automatiquement l'intervalle de laminage d'un matériau entre un cylindre maintenu à une position fixe et le cylindre mobile (2) dans une machine de calandrage ou de mélange, comprenant au moins un capteur (10) pour détecter la position spatiale relative des deux supports mobiles (1), des moyens de commande réglables de dispositifs d'actionnement (3-4) pour déplacer les deux supports mobiles (1), **caractérisé en ce que** le système comprend :
un circuit logique de commande programmable (15) pour un traitement de signal numérique et une commande numérique en boucle fermée des dispositifs d'actionnement (3-4), et un circuit d'interface (14) ;
chaque support (1) du cylindre mobile (2) étant déplacé par un seul cylindre hydraulique (3-4) commandé en mode de boucle fermée numérique pour positionner le cylindre mobile (2) dans la zone de travail ou loin de celle-ci, et pour réguler automatiquement l'intervalle de laminage pendant le fonctionnement ;
un unique capteur (10) détectant la position du support respectif (1) par rapport à une structure fixe (11), fournissant des données de position numérique au circuit logique de commande programmable (15) par l'intermédiaire du circuit d'interface (14) ;
le circuit d'interface (14) commandant des soupapes d'actionnement (12) des deux cylindres hydrauliques (3-4) en mode de boucle fermée numérique pendant les deux phases de positionnement du cylindre mobile (2) dans la zone de travail et loin de celle-ci, et régulant automatiquement l'intervalle de laminage pendant le fonctionnement.

2. Système selon la revendication 1, dans lequel une partie mobile de l'unique capteur (10) destiné à détecter la position de chaque support (1) détecte le mouvement de l'ensemble tige-piston (3) du cylindre hydraulique (3-4) par rapport à une partie fixe du capteur.

3. Système selon la revendication 1, dans lequel chaque cylindre hydraulique (3-4) comporte une partie mobile du capteur de position (10) à l'intérieur d'une cavité axiale (3a) d'un ensemble tige-piston (3) du cylindre hydraulique connecté au support mobile respectif (1) pour générer une valeur numérique représentative de la position spatiale relative du support (1) ;
le circuit d'interface (14) communiquant avec le circuit logique de commande programmable (15) exécutant un certain algorithme de commande, pour transmettre les valeurs numériques de position et pour commander les soupapes (12) des cylindres hydrauliques (3-4) .
